# EUROPEAN PATENT APPLICATION

(11) **EP 4 693 088 A1**
(43) Date of publication of application: **11.02.2026**
(21) Application number: 23930425.6
(22) Date of filing: 29.03.2023
(51) Int. Cl.: G06F 30/13, G06F 30/23

(54) **ANALYZING DEVICE AND ANALYZING METHOD**

(71) Applicant: Hitachi, Ltd., Tokyo 100-8280 (JP)
(72) Inventor: TORIUMI Wataru, Tokyo 101-8941 (JP); HATORI Takahiro, Tokyo 101-8941 (JP)
(74) Representative: Mewburn Ellis LLP
(86) International application number: PCT/JP2023/012817
(87) International publication number: WO 2024/201786

(57) **Abstract**

An analysis device that analyzes a flow rate of an object includes: a route search unit that searches for a moving route along which the object can move from a departure place to a destination set in a layout; a fragment generation unit that generates fragments obtained by dividing the moving route at a predetermined interval and calculates a throughput that is an object flow rate allowable value for each of the fragments; a traffic flow rate addition unit that sets a traffic flow rate of the object for each fragment based on a traffic flow rate set from the departure place to the destination; and a comparative evaluation unit that compares the throughput and the traffic flow rate of the object for each fragment to evaluate the throughput of the moving route.

## Description

### Technical Field

The present invention relates to an analysis device and an analysis method.

### Background Art

In recent years, building design using building model data such as building information modeling (BIM) data has been advanced for the purpose of reducing the number of building design steps. A building includes a plurality of floors, and the floor configuration varies depending on the tenants moving in the building. For example, even though the pillars supporting the floor are common to all floors, the floor layout of an operation room and the positions of the walls and the doors are different for each floor. It is required that a person who uses the building can move from a departure place of a floor to a destination without delay, but there may be a bottleneck on the floor where a person remains because of the arrangement of walls, gates, and the like. Thus, a technology for extracting the bottleneck as disclosed in Patent Literature 1 has been known.

Patent Literature 1 discloses that "for each user, a moving route of each user is estimated from the time history, and for each user, a portion of the moving route where the moving speed of the user is lower than a reference value is extracted as a bottleneck".

### Citation List

### Patent Literature

Patent Literature 1: JP 2020-78049 A

### Summary of Invention

### Technical Problem

In a large-scale building, the floor area for each floor increases, and the number of floors also increases to several tens of floors. Thus, oversight may occur when a study is conducted to find out which part of the building can have a bottleneck. Conventionally, to study whether a person who has departed from a departure place can arrive at a destination within a time determined when the building is designed, a bottleneck has been extracted by using a simulation technology disclosed in Patent Literature 1, for example. However, since simulation processing requires a large amount of processing time, it is desirable to be able to reduce information to be calculated.

The present invention has been made in view of such a circumstance, and an object of the present invention is to evaluate a throughput of a moving route of an object before simulation processing is performed.

### Solution to Problem

An analysis device according to the present invention analyzes a flow rate of an object, the analysis device including: a route search unit that searches for a moving route along which the object can move from a departure place to a destination set in a layout; a fragment generation unit that generates fragments obtained by dividing the moving route at a predetermined interval and calculates a throughput that is an object flow rate allowable value for each of the fragments; a traffic flow rate addition unit that sets a traffic flow rate of the object for each fragment based on a traffic flow rate set from the departure place to the destination; and a comparative evaluation unit that compares the throughput and the traffic flow rate of the object for each fragment to evaluate the throughput of the moving route.

### Advantageous Effects of Invention

The present invention can specify a bottleneck where the movement of an object stagnates based on the result of evaluating the throughput of the moving route of the object before performing the simulation processing.

### Brief Description of Drawings

Fig. 1 is a block diagram illustrating a functional configuration example of an analysis region specification device according to an embodiment of the present invention.
Fig. 2 is a block diagram illustrating a hardware configuration example of a calculator according to an embodiment of the present invention.
Fig. 3 is a diagram illustrating an example of a layout according to an embodiment of the present invention.
Fig. 4 is a diagram illustrating an example of an inter-doorway route according to an embodiment of the present invention.
Fig. 5 is a diagram illustrating an example of a fragment according to an embodiment of the present invention.
Fig. 6 is a diagram illustrating an example in which two security gates are provided at a cut between obstacle cells according to an embodiment of the present invention.
Fig. 7 is a diagram illustrating a configuration example of a passage fragment according to an embodiment of the present invention.
Fig. 8 is a diagram illustrating a configuration example of an inter-doorway traffic flow rate data according to an embodiment of the present invention.
Fig. 9 is a flowchart illustrating an example of analysis processing performed in an arithmetic unit according to an embodiment of the present invention.
Fig. 10 is a flowchart illustrating an example of inter-doorway route search processing performed in a route search unit according to an embodiment of the present invention.
Fig. 11 is a flowchart illustrating an example of passage fragment generation processing performed in a fragment generation unit according to an embodiment of the present invention.
Fig. 12 is a flowchart illustrating an example of traffic flow rate addition processing performed in a traffic flow rate addition unit according to an embodiment of the present invention.
Fig. 13 is a flowchart illustrating an example of comparative evaluation processing performed in a comparative evaluation unit according to an embodiment of the present invention.
Fig. 14 is a diagram illustrating a display example of a warning display screen according to an embodiment of the present invention.

### Description of Embodiments

Hereinafter, embodiments of the present invention will be described with reference to the accompanying drawings. In the present specification and the drawings, components having substantially the same function or configuration are denoted by the same reference numerals, and overlapping description is omitted.

### [One Embodiment]

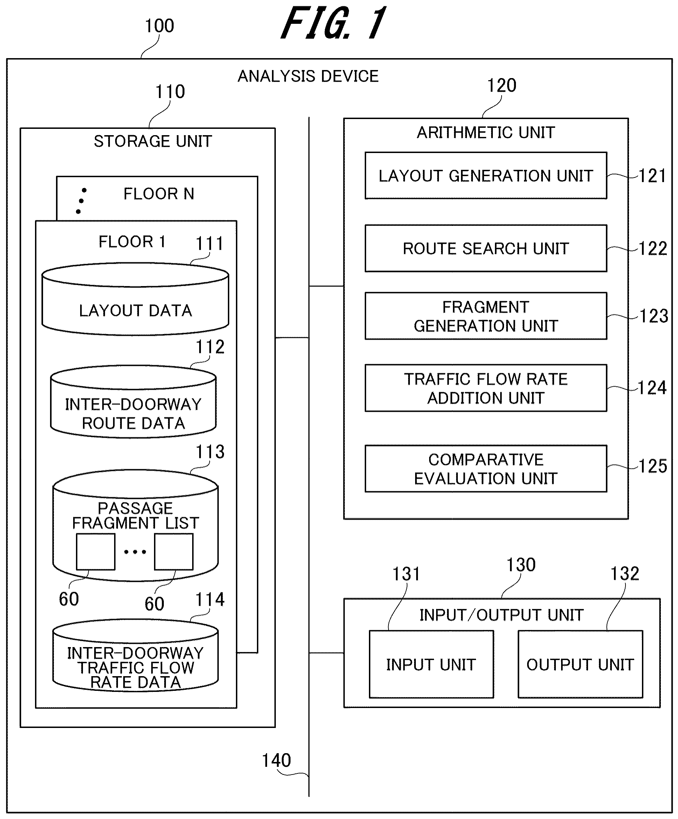

Fig. 1 is a block diagram illustrating a functional configuration example of an analysis device 100 according to an embodiment of the present invention. The analysis device 100 is an example of an analysis device having a function of analyzing the flow rate of objects (for example, people), and is operated by an operator who designs the layout of a floor. The analysis device 100 includes a storage unit 110, an arithmetic unit 120, and an input/output unit 130 connected to each other via a bus 140.

The storage unit 110 has a set of layout data 111, inter-doorway route data 112, a passage fragment list 113, and inter-doorway traffic flow rate data 114 for each of floors 1 to N of a building.

The layout data 111 is data having information indicating an area through which people can pass, information on facilities, and information on doorways. The layout data is generated from, for example, BIM data. For example, layout data on a cell used for simulation in a people flow simulator of a cellular automaton model may be used as the layout data 111.

The inter-doorway route data 112 is data representing a shortest inter-doorway route between an entrance (an example of a departure place) and an exit (an example of a destination) of a floor. When the layout data 111 is configured in a cell format, data of cells through which people can pass to move between doorways is stored in the inter-doorway route data 112 in a list format.

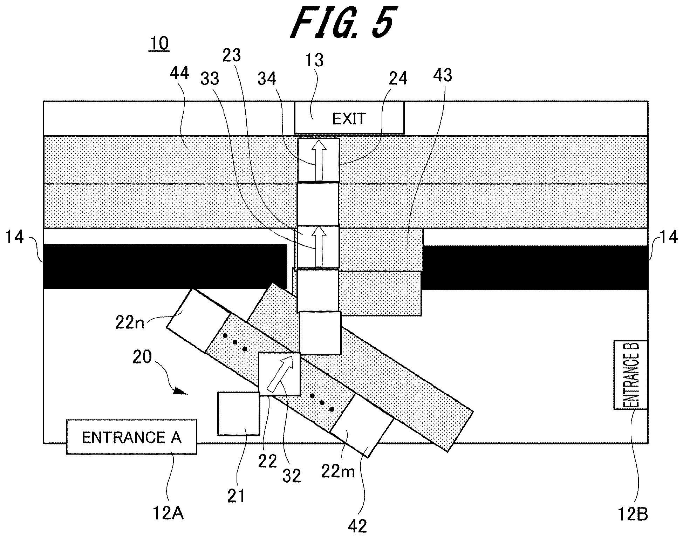

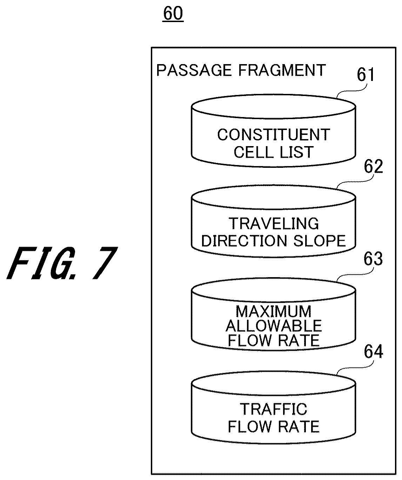

The passage fragment list 113 is data including a list of passage fragments 60 illustrated in Fig. 7 to be described later. The passage fragment 60 is information obtained by tracing the inter-doorway route indicated in the inter-doorway route data 112 at regular intervals, and is defined by a direction of the inter-doorway route and a space having a passage width which is a direction perpendicular to the direction of the inter-doorway route. Since a plurality of passage fragments 60 are provided for the inter-doorway route, the plurality of passage fragments 60 are stored in the passage fragment list 113. A specific shape of the passage fragment 60 is illustrated as passage fragments 42 to 44 in Fig. 5 to be described later, for example. A throughput calculated for each passage fragment 60 is stored in the passage fragment list 113.

The throughput of the passage fragment is the total traffic capacity of the passage fragment to allow people to pass therethrough per unit time. When the throughput is 2 people/s, the number of people who can pass through the passage fragment is up to two per second. When three people try to pass through this passage fragment per second, the throughput is insufficient, and people remain. To solve the insufficiency of the throughput, for example, a design change to increase the passage width of the passage fragment or an operation change to reduce the number of people flowing into the passage fragment is performed.

When a facility that limits a flow rate of people, such as a security gate, an escalator, or an elevator, is installed in the passage fragment, the throughput of the passage fragment is replaced with a throughput preset for the facility. For example, it is assumed that the throughput per security gate is 0.9 people/s, and two security gates are installed in the passage fragment. In this case, a throughput of 1.8 people/s obtained by throughput × number of devices is set as the throughput.

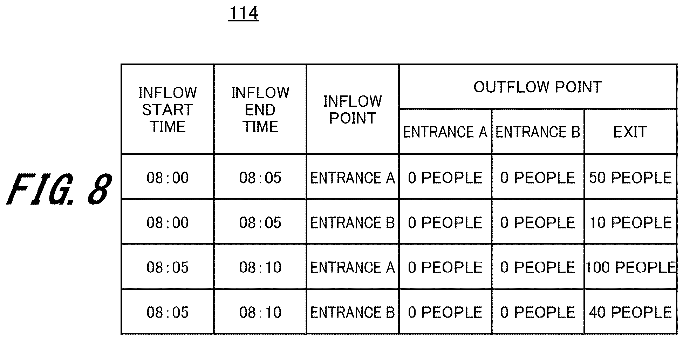

The inter-doorway traffic flow rate data 114 is data summarizing the inter-doorway traffic flow rate illustrated in Fig. 8 to be described later. The inter-doorway traffic flow rate represents the number of people moving at a predetermined time interval predicted between doorways on the floor. Thus, the inter-doorway traffic flow rate data 114 is one piece of input data input before the analysis device 100 performs processing, and is not data calculated in the arithmetic unit 120. In an office building, for example, the total number of inflow people for five minutes is calculated by multiplying the occupants in the rooms by a percentage defined for each building use (at the peak time of a tenant building, for example, 15%). Further, the total number of inflow people for five minutes is multiplied by the usage percentage of each entrance, and the total number of inflow people is proportionally divided into a plurality of entrances or a plurality of exits, whereby the inter-doorway traffic flow rate is calculated.

In an existing building, a monitoring camera or the like may be installed in the building, the number of inflow people and the number of outflow people may be analyzed from a captured image to calculate the inter-doorway traffic flow rate, and the calculated inter-doorway traffic flow rate may be stored as the inter-doorway traffic flow rate data 114.

The arithmetic unit 120 includes a layout generation unit 121, a route search unit 122, a fragment generation unit 123, a traffic flow rate addition unit 124, and a comparative evaluation unit 125.

The layout generation unit 121 generates a layout using, for example, a floor object or a space object in the BIM data. This layout is stored in the storage unit 110 as the layout data 111.

The route search unit 122 reads the layout data 111 from the storage unit 110 and analyzes the layout for each floor. Then, the route search unit 122 searches for a moving route along which the object can move from the departure place to the destination set in the layout. In the present embodiment, the departure place is an entrance, the destination is an exit, and the moving route is referred to as "inter-doorway route". For example, Dijkstra's algorithm or the like is used for the inter-doorway route search processing.

The fragment generation unit 123 traces the inter-doorway route from the entrance toward the exit and generates passage fragments in which the inter-doorway route is divided at predetermined intervals. As illustrated in Fig. 5 to be described later, the fragment generation unit 123 generates a passage fragment by extending a region where the object can move in a direction perpendicular to the traveling direction of the inter-doorway route with the inter-doorway route divided at predetermined intervals as a base point. Here, the width in the direction perpendicular to the traveling direction of the inter-doorway route is referred to as "width of passage fragment". After generating the passage fragments, the fragment generation unit 123 calculates a throughput which is an object flow rate allowable value for each passage fragment. The fragment generation unit 123 calculates a value obtained by multiplying the width of the passage fragment by the flow rate determined for each constant width (for example, a unit width of 1 m) of the passage fragment as the throughput at which the flow rate of the object is allowed for each passage fragment.

When the passage fragment includes a facility that limits the flow rate of the object, the fragment generation unit 123 calculates a value determined by the facility as the throughput. For example, when the passage fragment includes a security gate or an escalator as a facility, the fragment generation unit 123 calculates a value set in advance for the facility as the throughput. When the passage fragment includes an elevator as a facility, the fragment generation unit 123 calculates a value obtained from the transportation capacity of the elevator for a predetermined time as the throughput. The transportation capacity of the elevator can be calculated from, for example, the capacity of the elevator, the number of elevators, the speed of the elevator, or the like. Information on the passage fragments generated by the fragment generation unit 123 is stored in a list in the passage fragment list 113 of the storage unit 110.

The traffic flow rate addition unit 124 sets the traffic flow rate of the object for each passage fragment based on the traffic flow rate set from the departure place to the destination. The traffic flow rate is mainly set by adding a traffic flow rate. For example, the traffic flow rate addition unit 124 adds the traffic flow rate of each passage fragment to the passage fragment based on the inter-doorway traffic flow rate data 114 read from the storage unit 110.

Among passage fragments generated from one or a plurality of departure places and a plurality of inter-doorway routes searched with respect to one or a plurality of destinations, passage fragments having the same point and the same width may be generated. In such a case, the traffic flow rate addition unit 124 adds the traffic flow rates calculated in the plurality of inter-doorway routes to the passage fragments having the same point and the same width of the different inter-doorway routes. For example, when the traffic flow rate of the passage fragment of one inter-doorway route is 10 people, and the traffic flow rate of the passage fragment of the other inter-doorway route is 50 people, the traffic flow rate of 10 people + 50 people = 60 people is added to the passage fragments having the same point and the same width.

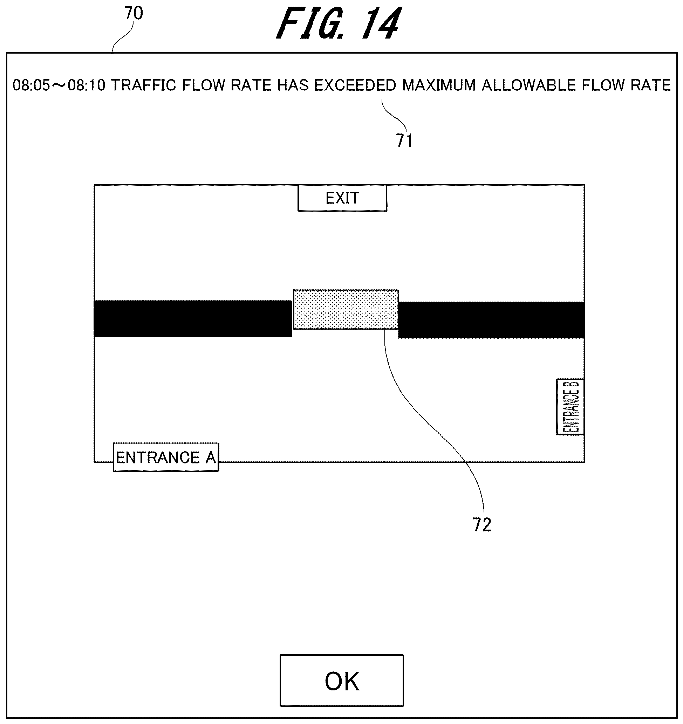

The comparative evaluation unit 125 compares the throughput and the traffic flow rate of the object for each passage fragment to evaluate the throughput of the inter-doorway route. For example, the comparative evaluation unit 125 compares a throughput (also referred to as a maximum allowable flow rate) obtained for each fragment from the inter-doorway traffic flow rate of the inter-doorway traffic flow rate data 114 input in advance and the traffic flow rate calculated for each fragment by the traffic flow rate addition unit 124. The comparative evaluation unit 125 outputs a warning to the operator when the flow rate of the object calculated for each passage fragment exceeds the throughput. For example, an example of warning information of a fragment whose traffic flow rate is larger than the throughput is illustrated as a warning display screen 70 in Fig. 14 to be described later.

The insufficiency of the throughput represents a state in which the planned traffic flow rate exceeds the throughput of the passage or the like. When the throughput is insufficient, people remain at a certain point. For example, when the passage width is insufficient with respect to the number of people flowing into the floor, when the number of gates of the security gate is insufficient, when the number of escalators is insufficient, or when the width of an automatic door or the number of automatic doors is insufficient, remaining occurs in front of each facility. When the number of elevators or the speed of the elevator is insufficient, remaining occurs in the elevator hall.

When a warning is output from the comparative evaluation unit 125, the operator takes a measure such as changing the number or arrangement of objects. For example, when a warning regarding a passage is output, the operator rearranges the walls to widen the passage. When a warning regarding an automatic door, an escalator, or a security gate is output, the width of each facility is increased, or the number of facilities is increased. When a warning regarding the elevator is output, the number of elevators, the capacity of the elevator, the speed of the elevator, or the like is reviewed. In this manner, the operator can take various measures before performing the simulation processing. In the case of a building that is already in operation, measures can be taken by providing partitions to align people, arranging security guards, or the like.

The input/output unit 130 includes an input unit 131 and an output unit 132.

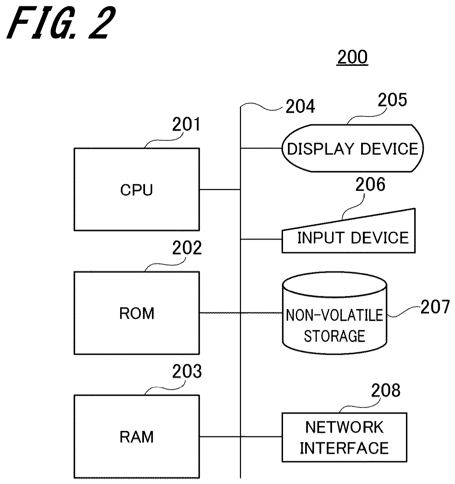

The input unit 131 receives data or an instruction input by the operator from an input device 206 (see Fig. 2 to be described later), and passes the received data or instruction to the arithmetic unit 120.

The output unit 132 outputs a screen or the like to a display device 205 (see Fig. 2 to be described later). For example, the output unit 132 outputs the layout, the inter-doorway route, and the like, and outputs a comparative evaluation result and the warning display screen 70 (see Fig. 14 to be described later). The output unit 132 may output the above-described data and comparative evaluation results to a mobile terminal, a cloud server, and a printing device connected to the analysis device 100.

### <Calculator Hardware Configuration Example>

Next, a hardware configuration of the calculator 200 constituting the analysis device 100 will be described.

Fig. 2 is a block diagram illustrating a hardware configuration example of the calculator 200. The calculator 200 is an example of hardware used as a computer operable as the analysis device 100 according to the present embodiment. The analysis device 100 according to the present embodiment realizes an analysis region specifying method performed by the respective functional blocks illustrated in Fig. 1 in cooperation with each other with the calculator 200 (computer) executing a program.

The calculator 200 includes a central processing unit (CPU) 201, a read only memory (ROM) 202, and a random access memory (RAM) 203 each connected to a bus 204. The calculator 200 further includes a display device 205, an input device 206, a non-volatile storage 207, and a network interface 208.

The CPU 201 reads a program code of software for realizing each function unit of the arithmetic unit 120 according to the present embodiment from the ROM 202 and executes the program code. Variables, parameters, and the like are temporarily written to the RAM 203 by the CPU 201 and are read as appropriate.

The display device 205 displays a result of processing performed by the calculator 200 and the like to the operator. The input device 206 enables the operator to perform predetermined operation input and instruction.

As the non-volatile storage 207, for example, a hard disk drive (HDD), a solid state drive (SSD), an optical disk, a non-volatile memory, or the like is used. The ROM 202 and the non-volatile storage 207 are used as an example of a non-transitory computer-readable storage medium storing a program to be executed by the calculator 200. The storage unit 110 illustrated in Fig. 1 is configured in the non-volatile storage 207.

For example, a network interface card (NIC) or the like is used as the network interface 208, and various types of data can be transmitted and received to and from another analysis device 100.

### <Specific Example of Layout and Fragment>

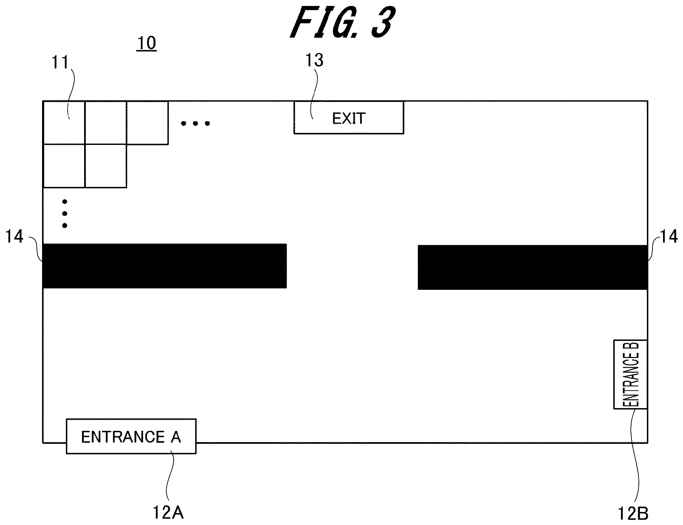

Next, specific examples of the layout, the inter-doorway route, the passage fragment, and the inter-doorway traffic flow rate will be described with reference to Figs. 3 to 8.

Fig. 3 is a diagram illustrating an example of the layout 10.

The layout 10 is illustrated based on the layout data 111 (see Fig. 1). The layout 10 simulates a floor configuration of a plane excluding information on a height direction of the space object. The layout 10 is generated for each floor of a building, and the shape of the floor is configured by a plurality of cells 11 (not illustrated). In the following drawings, the description of the cell 11 is omitted.

At the lower left of the layout 10, an entrance cell 12A called an entrance A is provided as an example of the departure place. At the lower right of the layout 10, an entrance cell 12B called an entrance B is provided as an example of the departure place. On the upper part of the layout 10, an exit cell 13 called an exit is provided as an example of the destination. On the floor where an elevator or an escalator is installed at the positions of the entrances A and B or the exit, the elevator or the escalator is represented as one cell.

In the middle of the layout 10, obstacle cells 14 which are obstacles (for example, walls) extending from both sides toward the center are provided. The obstacle cell 14 represents an impassable area where people cannot enter. The obstacle cell 14 may be a desk, a shelf, or the like in addition to a wall. All the cells 11 except the obstacle cells 14 on the floor are passable areas where people can pass, and they are targets to be calculated by the arithmetic unit 120.

People entering the floor from the entrance A and the entrance B move toward the exit. However, the flow of people entering the floor from the entrance A and the entrance B is affected by the obstacle cell 14. Specifically, when people pass through a cut between the obstacle cells 14, people tend to remain. In this case, the throughput of the passage at the cut between the obstacle cells 14 is insufficient.

In the layout 10, an impassable area (not illustrated) such as an outer wall of the building positioned on the outer periphery of the floor is excluded. However, the layout data 111 may include the impassable area (not illustrated) such as an outer wall of the building.

### <Inter-Doorway Route>

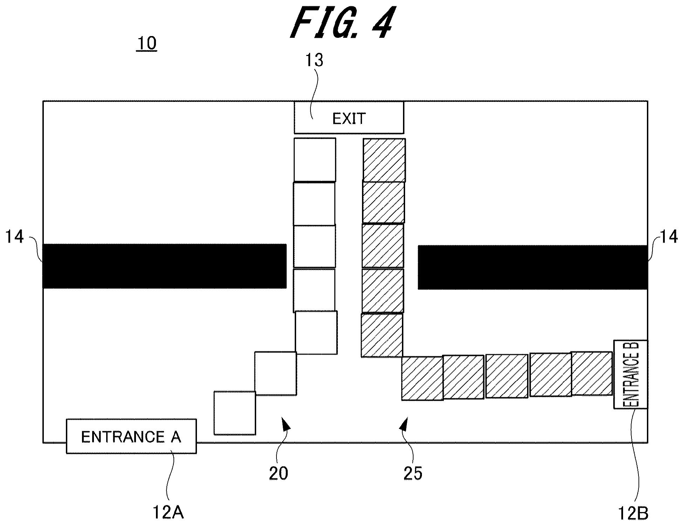

Fig. 4 is a diagram illustrating an example of inter-doorway routes 20 and 25.

First, the route search unit 122 searches for the inter-doorway route 20 with the entrance A as the departure place and the exit as the destination. Then, the route search unit 122 searches for the inter-doorway route 25 with the entrance B as the departure place and the exit as the destination. The inter-doorway routes 20 and 25 are represented by arranging a plurality of cells. Then, information of each cell constituting the inter-doorway routes 20 and 25 is stored in the storage unit 110 as the inter-doorway route data 112.

### <Passage Fragment>

Fig. 5 is a diagram illustrating an example of the passage fragment.

The fragment generation unit 123 generates a passage fragment for each cell constituting the inter-doorway route 20. The fragment generation unit 123 also generates a passage fragment for a cell constituting the inter-doorway route 25. However, to avoid complication of the drawing, description of passage fragments generated for the inter-doorway route 25 is omitted in Fig. 5.

In each cell obtained by dividing the inter-doorway route 20 at a predetermined interval, the direction of the inter-doorway route 20 is determined according to the positional relationship with an adjacent cell. For example, a traveling direction 32 indicating an obliquely upper right direction is determined for a cell 22. The passage fragment 42 is generated in a direction substantially perpendicular to the traveling direction 32.

The passage fragment 42 is produced extending a passable cell until it contacts the obstacle cell 14 or a wall around the floor. In Fig. 5, the passable cell is extended to a cell 22m on the right side and a cell 22n on the left side from the cell 22 which is a part of the inter-doorway route 20 as a base point.

Similarly, a traveling direction 33 indicating an upward direction is determined with respect to a cell 23 at a cut between the obstacle cells 14, and a passage fragment 43 is generated in a direction substantially perpendicular to the traveling direction 33. A traveling direction 34 indicating an upward direction is determined with respect to a cell 24 near the exit, and a passage fragment 44 is generated in a direction substantially perpendicular to the traveling direction 34.

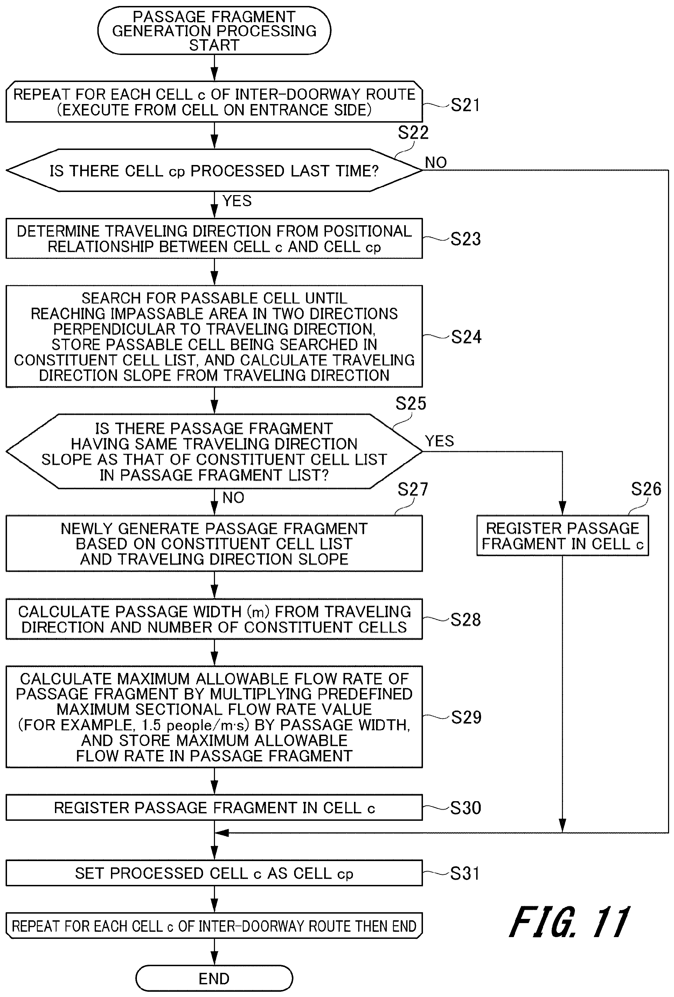

As illustrated in Fig. 11 to be described later, the traveling direction of the inter-doorway route 20 is calculated by the positional relationship between the cell processed last time and the cell to be processed this time. Thus, the traveling direction of a cell 21 closest to the entrance A is initially unknown, and thus no passage fragment is generated. However, after the cell 22 is determined, the traveling direction may be determined with respect to the cell 21, and a passage fragment may be generated in a direction substantially perpendicular to the traveling direction of the cell 21.

### <Installation of Two Security Gates>

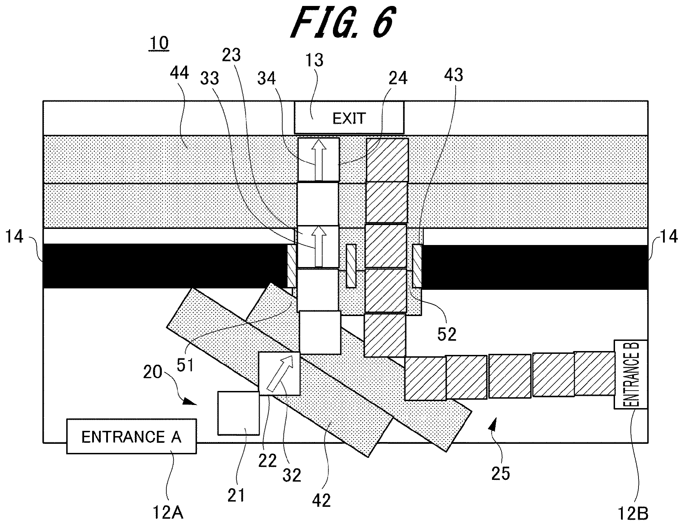

Fig. 6 is a diagram illustrating an example in which two security gates 51 and 52 are provided at a cut between the obstacle cells 14. Fig. 6 illustrates the inter-doorway route 25, but the passage fragment calculated for each cell of the inter-doorway route 25 is not illustrated.

When the security gates 51 and 52 are provided at a cut between passages or the obstacle cells 14, people tend to remain at the position. In such a case, the security gates 51 and 52 are included in a part of the passage fragments generated for each of the inter-doorway routes 20 and 25. Thus, the fragment generation unit 123 illustrated in Fig. 1 calculates the total throughput of the security gates in the passage fragments as the throughput.

For example, in a normal passage, the fragment generation unit 123 calculates the total throughput (passable flow rate) of the fragments by applying a flow rate of 1.5 people/s per 1 m of the length in the traveling direction of the passage fragment. On the other hand, for example, when two security gates 51 and 52 having a throughput of 0.9 people/s are installed in the passage fragments, the fragment generation unit 123 calculates the throughput not by 1.5 people × fragment width but by 0.9 people × number of gates. The calculation processing is also applied to calculation processing for the throughput of an escalator or an elevator, for example. In the calculation processing for elevators, the passage fragments are configured by a group including a plurality of elevators. In this case, the fragment generation unit 123 calculates the throughput using a theoretical calculation formula called traffic calculation for calculating how many people can be transported per predetermined period, for example, 5 minutes, by the group of elevators, and applies the throughput to the passage fragments.

### <Passage Fragment>

Fig. 7 is a diagram illustrating a configuration example of the passage fragment 60. Here, each passage fragment illustrated in Fig. 5 will be collectively referred to as passage fragment 60.

The passage fragment 60 includes a plurality of pieces of information, and is provided for each of the passage fragments 42 to 44 generated for the cells 22 to 24 of the inter-doorway route 20 illustrated in Fig. 5. The passage fragment 60 includes a constituent cell list 61, a traveling direction slope 62, a maximum allowable flow rate 63, and a traffic flow rate 64. The passage fragment list 113 illustrated in Fig. 1 is a set of passage fragments 60.

The constituent cell list 61 stores information such as the position of the passable cell in which the passage fragment 60 is configured and the position of an adjacent cell in a list format. As illustrated in Fig. 5, information (coordinates, size, and the like) of a plurality of passable cells 22m to 22n that are extended in a direction perpendicular to the slope of the traveling direction of the cell 22 constituting the inter-doorway route 20 and reaching the impassable area is stored in the constituent cell list 61.

The traveling direction slope 62 is a slope of the traveling direction of the cell serving as the base point of the passage fragment 60. For example, a slope of an arrow indicated as the traveling directions 32 to 34 in Fig. 5 is referred to as a traveling direction slope.

The maximum allowable flow rate 63 is the maximum allowable flow rate of the passage fragment 60. The maximum allowable flow rate is expressed as the maximum number of people who can pass through a certain passage width within a predetermined time, that is, the throughput.

The traffic flow rate 64 represents a traffic flow rate which is the number of passers required to be set in the passage fragment 60 constituting the inter-doorway route. When the number of people exceeding the maximum allowable flow rate is set to the traffic flow rate 64 in the passage fragment 60, the throughput is insufficient, and thus, it is necessary to take measures such as widening the width of the passage fragment 60 and reducing the number of people flowing into the passage fragment 60.

Fig. 8 is a diagram illustrating a configuration example of the inter-doorway traffic flow rate data 114.

The inter-doorway traffic flow rate data 114 has items of an inflow start time, an inflow end time, an inflow point, and an outflow point. The outflow point has items of the entrance A, the entrance B, and the exit.

For example, the number of people who flow into the floor and flow out from the floor in 5 minutes when the inflow start time is 8:00 and the inflow end time is 8:05 is represented by the data in the upper two rows of the inter-doorway traffic flow rate data 114. For example, on the floor illustrated in Fig. 3, the inflow points are the entrances A and B, and the outflow point is the exit.

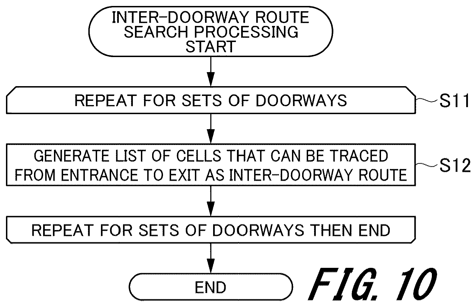

Fig. 8 illustrates that the number of people who enter from the entrance A and exit from the exit is 50, and the number of people who enter from the entrance B and exit from the exit is 10. Then, 50 people who have flowed in from the entrance A are added to each fragment of the inter-doorway route 20 illustrated in Fig. 5, and 10 people who have flowed in from the entrance B are added to each fragment of the inter-doorway route 25.

### <Processing of Each Functional Unit>

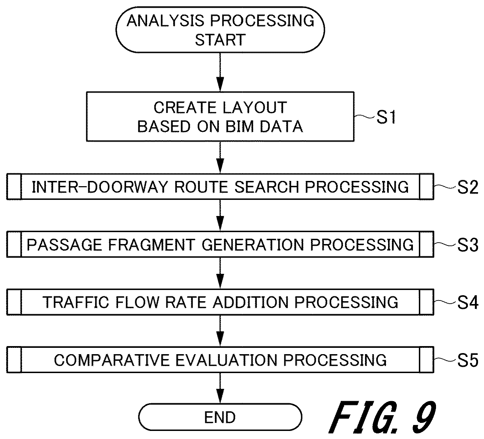

Next, an example of processing performed by each functional unit of the arithmetic unit 120 will be described with reference to Figs. 9 to 13.

### <Analysis Processing>

Fig. 9 is a flowchart illustrating an example of analysis processing performed in the arithmetic unit 120.

First, the layout generation unit 121 generates the layout 10 based on BIM data input from an external device (S1). The layout 10 that has been generated is stored in the storage unit 110 as the layout data 111.

Next, the route search unit 122 acquires the layout 10 from the layout data 111 and performs inter-doorway route search processing of searching for an inter-doorway route for each floor (S2). The inter-doorway route that has been searched is stored in the storage unit 110 as the inter-doorway route data 112.

Next, the fragment generation unit 123 acquires the inter-doorway route from the inter-doorway route data 112 and performs passage fragment generation processing (S3). The passage fragments that have been generated are stored in the storage unit 110 as the passage fragment list 113.

Next, the traffic flow rate addition unit 124 acquires the passage fragments and the inter-doorway traffic flow rate data 114 and performs traffic flow rate addition processing of adding the inter-doorway traffic flow rate to the passage fragments (S4).

Next, the comparative evaluation unit 125 performs comparative evaluation processing of comparing the throughput and the traffic flow rate for each passage fragment (S5). Then, when it is found that there is a passage fragment having an insufficient throughput through the comparative evaluation processing, a warning is output to the operator, and the processing ends.

### <Inter-Doorway Route Search Processing>

Fig. 10 is a flowchart illustrating an example of inter-doorway route search processing performed in the route search unit 122.

The route search unit 122 starts processing (S11) of repeating the inter-doorway route search processing for the sets of doorways provided on the floor. For example, when there are two entrances (entrances A and B) and one exit on the floor, the search processing is performed for two sets of "the entrance A and the exit" and "the entrance B and the exit". When there are two entrances (entrances A B) and two exits (exits A and B), four sets of search processing combining each entrance and each exit are performed.

When selecting a set of an entrance and an exit, the route search unit 122 generates a list of a plurality of cells that can be traced from the entrance to the exit, and sets the list of the plurality of cells that has been generated as an inter-doorway route (S12). In the following description, a cell of the inter-doorway route stored in the list is referred to as "cell c". The route search unit 122 selects another set of an entrance and an exit and repeats the processing of step S2. This piece of processing is repeated until all sets of an entrance and an exit have been selected.

### <Passage Fragment Generation Processing>

Fig. 11 is a flowchart illustrating an example of passage fragment generation processing performed in the fragment generation unit 123.

The fragment generation unit 123 starts processing (S21) of repeating the processing for each cell c of the inter-doorway route searched by the route search unit 122. The processing starts from the cell c on the entrance side of the inter-doorway route.

After step S21, the fragment generation unit 123 determines whether there is a cell cp which is a cell processed last time (S22). When there is no cell cp processed last time (NO in S22), the processing proceeds to step S31. For example, when the processing is first started for the cell c on the entrance side in step S21, the cell c on the entrance side is set as the cell cp (S31) because there is no cell cp processed last time, and the processing returns to step S21 and is repeated.

When there is the cell cp processed last time (YES in S22), the fragment generation unit 123 determines the traveling direction of the inter-doorway route based on the positional relationship between the cell c to be processed this time and the cell cp processed last time (S23). The traveling direction is determined by the positional relationship between the cell c to be processed this time and the cell cp processed last time. An index indicating in which direction the cell c can be reached when viewed from the cell cp is the traveling direction.

When the fragment generation unit 123 determines the traveling direction, for a cell model, for example, a method of searching eight surrounding directions from the cell cp and searching for a direction in which the cell c can be reached in a brute-force manner may be used. The fragment generation unit 123 may calculate the moving direction with vector calculation. For example, when Vec(x) is expressed as a coordinate vector of x, the moving direction from the cell cp to the cell c can be obtained as a vector formula of Vec(c) - Vec(cp).

Next, the fragment generation unit 123 obtains two directions perpendicular to the traveling direction, searches for a passable cell from a cell as a base point until reaching an impassable area in each of the two perpendicular directions, and stores the passable cell being searched in the constituent cell list 61 illustrated in Fig. 7. The fragment generation unit 123 calculates the traveling direction slope 62 illustrated in Fig. 7 based on the traveling direction (S24).

Next, the fragment generation unit 123 determines whether the passage fragment having the same slope of the traveling direction as that of the constituent cell list is stored in the passage fragment list 113 (S25). When the passage fragment 60 having the same traveling direction slope 62 as that of the constituent cell list 61 is stored (YES in S25), the fragment generation unit 123 registers the passage fragment 60 in the cell c (S26), and the processing proceeds to step S31. In step S25, the confirmation of the identity of the slopes in the traveling direction may be omitted. The identity verification of the constituent cell list may be identity verification of only some cells of the constituent cell list. When identity verification is performed in this way, and for example, there are a route passing through a certain bottleneck from the front and a route passing through the bottleneck obliquely, passage fragments of the bottleneck in these plurality of routes can be handled as the same fragment, and there is a possibility that the bottleneck can be detected more accurately.

On the other hand, when the passage fragment 60 having the traveling direction slope 62 same as that of the constituent cell list 61 is not stored (NO in S25), the fragment generation unit 123 newly generates a passage fragment 60 based on the constituent cell list 61 and the traveling direction slope 62 (S27).

Next, the fragment generation unit 123 calculates the passage width (m) based on the traveling direction and the number of passable cells stored in the constituent cell list (S28). For example, when one side of the passable cell is 1 m and six passable cells are stored in the constituent cell list, the passage width is calculated as 1 m × 6 = 6 m.

Next, the fragment generation unit 123 calculates the maximum allowable flow rate 63 of the passage fragment 60 by multiplying a predefined maximum sectional flow rate value (for example, 1.5 people/m·s) by the passage width (m). Then, the fragment generation unit 123 stores the maximum allowable flow rate 63 in the passage fragment 60 (S29). When the passage fragment includes a facility that limits the flow rate of the object, processing of calculating a value determined for the facility as the maximum allowable flow rate 63 (that is, the throughput) is performed. Next, the fragment generation unit 123 registers the passage fragment 60 storing the constituent cell list 61, the traveling direction slope 62, and the maximum allowable flow rate 63 to the cell c (S30).

After the NO determination in step S22, the processing of step S26, or the processing of step S30, the fragment generation unit 123 sets the processed cell c as the cell cp (S31), and returns to step S21. In step S21, the next cell c adjacent to the processes cell c (cell cp) is selected, and the processing is performed again.

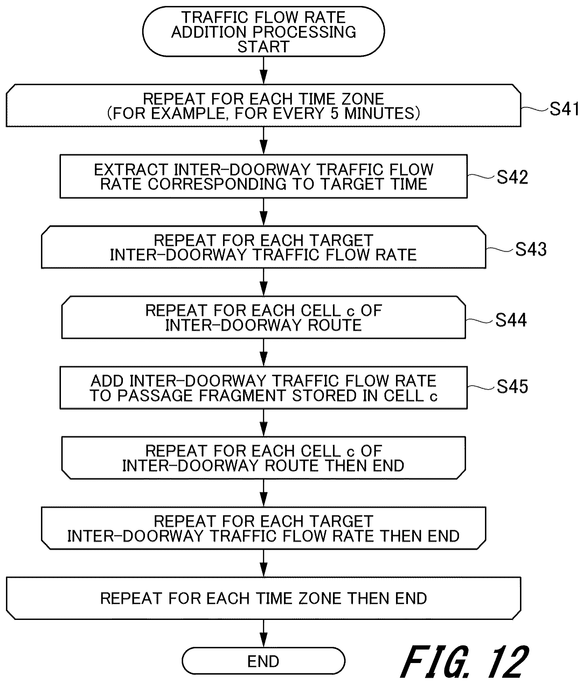

When there is a plurality of inter-doorway routes, the processing is performed for each inter-doorway route. After the processing of step S22 and after step S22 is performed on all the cells c of all the inter-doorway routes, the repetitive processing of step S21 ends. After the processing ends, the traffic flow rate addition processing illustrated in Fig. 12 is performed.

### <Traffic Flow Rate Addition Processing>

Fig. 12 is a flowchart illustrating an example of traffic flow rate addition processing performed in the traffic flow rate addition unit 124.

The traffic flow rate addition unit 124 starts processing (S41) of repeating the processing for each time zone of the inflow start time and the inflow end time determined in advance in the inter-doorway traffic flow rate data 114. The processing is performed, for example, every five minutes.

Next, the traffic flow rate addition unit 124 extracts the inter-doorway traffic flow rate corresponding to the time targeted for the processing from the inter-doorway traffic flow rate data 114 (S42). For example, when the inter-doorway traffic flow rate between 8:00 and 8:05 is extracted from the inter-doorway traffic flow rate data 114 illustrated in Fig. 8, the inter-doorway traffic flow rate is 50 people when the inflow point is the entrance A and 10 people when the inflow point is the entrance B.

Next, the traffic flow rate addition unit 124 repeats the following processing for each inter-doorway traffic flow rate targeted for the processing (S43). For example, when the time between 8:00 and 8:05 is set as the analysis target time, the traffic flow rate addition unit 124 extracts each element corresponding to the inflow start time and the inflow end time one by one from the inter-doorway traffic flow rate data 114 illustrated in Fig. 8 and executes the processing. When the set of doorways having no value is ignored, the processing for the 50 people moving from the entrance A to the exit is the first repetitive processing of step S43. The processing for the 10 people moving from the entrance B to the exit is the second repetitive processing of step S43.

Next, the traffic flow rate addition unit 124 repeats the following processing for each cell c of the inter-doorway route (S44). Here, processing (S45) of adding the inter-doorway traffic flow rate to the passage fragment 60 stored in the cell c is performed. For example, the inter-doorway route of each set of the entrances A and B and the exit taken out in step S43 is calculated in advance as a set of cells c by the route search unit 122. Thus, the traffic flow rate addition unit 124 adds the inter-doorway traffic flow rate for each cell c included in the inter-doorway route to obtain the traffic flow rate 64 illustrated in Fig. 7. After the processing of step S45 is performed on all the cells c in the inter-doorway routes, the repetitive processing of step S44 ends.

In the first repetitive processing of step S43, a value obtained by adding 50 people as the inter-doorway traffic flow rate to 0 people as the initial value of each passage fragment 60 of the inter-doorway route 20 illustrated in Fig. 5 is calculated as the traffic flow rate 64. In the second repetitive processing of step S43, 10 people are added as the inter-doorway traffic flow rate to 0 people as the initial value of each passage fragment 60 of the inter-doorway route 25 illustrated in Fig. 6. After the processing of step S44 and after step S44 is performed on the inter-doorway route to be targeted for the processing, the repetitive processing of step S43 ends.

Passage fragments of the inter-doorway routes 20 and 25 overlap from the cut between the obstacle cells 14 to the exit illustrated in Fig. 6. Thus, in each passage fragment 60 from a cut between the obstacle cells 14 to the exit, a value (60 people) obtained by adding 10 people in the second repetitive processing to 50 people stored in the first repetitive processing is calculated as the traffic flow rate 64. After the processing for all the cells of the inter-doorway route, the inter-doorway flow rate to be targeted, and each time zone ends, the processing ends.

### <Comparative Evaluation Processing>

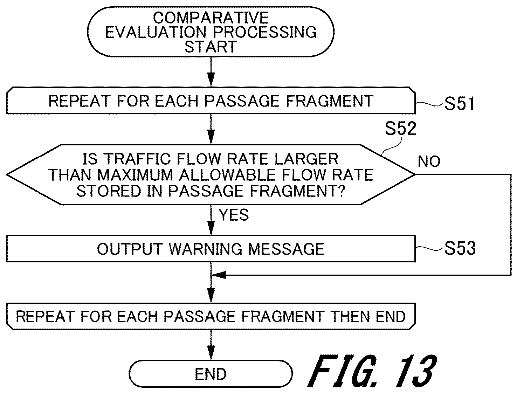

Fig. 13 is a flowchart illustrating an example of comparative evaluation processing performed in the comparative evaluation unit 125.

The comparative evaluation unit 125 starts processing (S51) of repeating the processing for each passage fragment 60.

Next, the comparative evaluation unit 125 compares the flow rates and evaluates whether the traffic flow rate 64 is larger than the maximum allowable flow rate 63 stored in the passage fragment 60 (S52). When the traffic flow rate 64 is smaller than the maximum allowable flow rate 63 (NO in S52), people can pass through the passage fragment 60 within a predetermined time. Thus, the comparative evaluation unit 125 returns to step S51 again and continues the comparative evaluation on the next passage fragment 60.

When the traffic flow rate 64 is larger than the maximum allowable flow rate 63 (YES in S52), people remain and cannot pass through the passage fragment 60 within a predetermined time. Thus, the comparative evaluation unit 125 outputs a warning message (see Fig. 14 to be described later) (S53). After the processing for all the passage fragments 60 ends, the processing ends.

### <Warning Display Screen>

Fig. 14 is a diagram illustrating a display example of the warning display screen 70.

When the throughput of the passage fragment 60 in a predetermined time zone is insufficient, a warning message is output to the operator. The warning display screen 70 displays the warning message 71 and a point 72 where the throughput is insufficient. By viewing the warning display screen 70, the operator takes measures such as widening the width of the point 72 where the throughput is insufficient and reducing the number of inflow people from the entrances A and B.

The warning display screen 70 including the warning message 71 and a plurality of points 72 where the throughput is insufficient may be displayed after the processing for all the passage fragments 60 in the floor ends.

In the analysis device 100 according to the embodiment described above, after the inter-doorway route is searched, the traffic flow rate is added for each passage fragment generated from the inter-doorway route, and the maximum allowable flow rate is compared with the traffic flow rate. Then, the analysis device 100 displays the warning display screen 70 when the traffic flow rate exceeds the maximum allowable flow rate. Thus, the operator can realize a building plan that minimizes stagnation of the flow of people by correcting the point where the throughput is insufficient before performing a people flow simulation. Further, it is possible to greatly reduce the time required for people flow simulation processing performed in a state where the bottleneck is eliminated.

In addition, according to the embodiment described above, even when there is a plurality of doorways on one floor, the operator can grasp the point where the throughput is insufficient, and can quickly correct the arrangement of the objects.

### [Modification]

When the floor is used as a warehouse or the like, the throughput may be evaluated by focusing on the flow of various articles (an example of the object) such as products and equipment. The throughput may be evaluated by focusing on the movement of a robot (an example of the object) used on a floor where people are present.

In addition, when there is an exhibit or the like in the shortest route from an entrance to an exit, the route search unit 122 may search for a route bypassing the exhibit as the inter-doorway route. The operator may freely change the inter-doorway route.

As long as the passage fragments are obtained by dividing the inter-doorway route at a predetermined interval along the direction of the inter-doorway route, adjacent passage fragments do not have to be in contact with each other.

Each data stored in the storage unit 110 is easily shared between the own device and another analysis device 100. This piece of data may be provided to a simulation device provided separately from the analysis device 100.

When the building to be analyzed by the analysis device 100 is a large-scale building, the analysis processing illustrated in Fig. 9 may be automatically performed on all the floors. In such a case, the warning display screen 70 displays information on the floor evaluated as having insufficient throughput. The operator can efficiently change the design or operation of the floor only for the floor that needs to be handled.

The present invention is not limited to the above-described embodiment, and it is needless to say that various other application examples and modifications can be taken without departing from the gist of the present invention described in the claims.

The above-described embodiment is provided for specifically describing the configuration of the analysis device in detail to clearly describe the present invention, and is not necessarily limited to those having all the described configurations. It is possible to add, delete, and replace other configurations for a part of the configuration of the embodiments.

Control lines and information lines considered to be necessary for description are illustrated, and not all control lines and information lines are necessarily illustrated in terms of products. In practice, it may be considered that almost all the configurations are connected to each other.

### Reference Signs List

- 10: layout
- 11: cell
- 20: inter-doorway route
- 21 to 24: cell
- 60: passage fragment
- 61: constituent cell list
- 62: traveling direction slope
- 63: allowable flow rate
- 64: traffic flow rate
- 70: warning display screen
- 100: analysis device
- 110: storage unit
- 111: layout data
- 112: inter-doorway route data
- 113: passage fragment list
- 114: inter-doorway traffic flow rate data
- 120: arithmetic unit
- 121: layout generation unit
- 122: route search unit
- 123: fragment generation unit
- 124: traffic flow rate addition unit
- 125: comparative evaluation

## Claims

1. An analysis device that analyzes a flow rate of an object, the analysis device comprising:
a route search unit that searches for a moving route along which the object can move from a departure place to a destination set in a layout;
a fragment generation unit that generates fragments obtained by dividing the moving route at a predetermined interval and calculates a throughput that is an object flow rate allowable value for each of the fragments;
a traffic flow rate addition unit that sets a traffic flow rate of the object for each fragment based on a traffic flow rate set from the departure place to the destination; and
a comparative evaluation unit that compares the throughput and the traffic flow rate of the object for each fragment to evaluate the throughput of the moving route.

2. The analysis device according to claim 1, wherein
the fragment generation unit generates each fragment by extending a region where the object can move in a direction perpendicular to a traveling direction of the moving route with the moving route divided at the predetermined interval as a base point.

3. The analysis device according to claim 2, wherein
the traffic flow rate addition unit adds the traffic flow rate calculated on a plurality of the moving routes searched with respect to one or a plurality of the departure places and one or a plurality of the destinations to the fragments having the same point and the same width among the fragments generated from the plurality of moving routes.

4. The analysis device according to claim 3, wherein
the comparative evaluation unit outputs a warning when the flow rate of the object calculated for each fragment exceeds the throughput.

5. The analysis device according to claim 4, wherein
the fragment generation unit calculates a value obtained by multiplying the width of the fragment by a flow rate determined for each constant width of the fragment as the throughput at which the flow rate of the object is allowed for each fragment.

6. The analysis device according to claim 4, wherein
when the fragment includes a facility that limits the flow rate of the object, the fragment generation unit calculates a value determined by the facility as the throughput.

7. The analysis device according to claim 6, wherein
when the fragment includes a security gate or an escalator as the equipment, the fragment generation unit calculates a value preset for the security gate or the escalator as the throughput.

8. The analysis device according to claim 6, wherein
when the fragment includes an elevator as the facility, the fragment generation unit calculates a value obtained from a transport capacity for a predetermined time calculated from a capacity of the elevator, the number of elevators, or a speed of the elevator as the throughput.

9. An analysis method for analyzing a flow rate of an object, the analysis method comprising:
a step of searching for a moving route along which the object can move from a departure place to a destination set in a layout;
a step of generating fragments obtained by dividing the moving route at a predetermined interval and calculating a throughput that is an object flow rate allowable value for each of the fragments;
a step of setting a traffic flow rate of the object for each fragment based on a traffic flow rate set from the departure place to the destination; and
a step of comparing the throughput and the traffic flow rate of the object for each fragment to evaluate the throughput of the moving route.
